# EUROPÄISCHE PATENTSCHRIFT

(11) **EP 2 734 417 B1**
(45) Veröffentlichungstag und Bekanntmachung des Hinweises auf die Patenterteilung: **17.08.2016**
(21) Anmeldenummer: 12710229.1
(22) Anmeldetag: 20.03.2012
(51) Int. Cl.: B60R 13/08, B32B 15/01

(54) **SCHALL- UND WÄRMESCHUTZSCHILD**
SOUND AND HEAT PROTECTION SHIELD
ECRAN DE PROTECTION ACOUSTIQUE ET THERMIQUE

(30) Priorität: 19.07.2011 DE 102011079413
(43) Veröffentlichungstag der Anmeldung: 28.05.2014
(73) Patentinhaber: Federal-Mogul Sealing Systems Gmbh, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2012/054857
(87) Internationale Veröffentlichungsnummer: WO 2013/010684

(56) Entgegenhaltungen:
- DE-A1- 2 201 637
- DE-A1- 19 508 335
- US-B1- 6 387 535

## Beschreibung

Die vorliegende Erfindung betrifft Abschirmbleche zur Wärme- und Schallabschirmung in Verbrennungsmotoren.

Um die in Verbrennungsmotoren entstehende Abwärme und Motorgeräusche nach außen hin abzuschirmen, werden standardmäßig Abschirmbleche an verschiedenen Bauteilen eingesetzt. Ein solches Blech kann beispielsweise eine oder mehrere Blechlagen umfassen und soll aufgrund des Einsatzortes im Motor möglichst hitzebeständig sein.

US 6387535 offenbart ein Abschirmblech nach dem Oberbegriff des Anspruchs 1.

### Zusammenfassung

Es wird daher ein Abschirmblech zur Wärme- und Schallisolation aus mindestens drei Lagen wie in Anspruch 1 vorgeschlagen, bei dem die untere und obere Lage ein Metallblech umfasst und die zwischen diesen Blechen angeordnete Mittellage ein Metallfaservlies umfasst. Die Unteransprüche beschreiben vorteilhafte Weiterbildungen der Erfindung.

Das Metallfaservlies der mittleren Lage verbessert die Schallabsorption und Wärmeisolierung des Abschirmblechs und ist dabei flexibel an die Gegebenheiten der abzuschirmenden Bauteile anpassbar. Das Vlies ist flexibel und leicht verformbar, ohne dabei die intrinsischen Eigenschaften des verwendeten Metalls zu verändern. Die in dem Vlies verwendeten Metallfasern sollen einen Durchmesser von etwa 1 bis 50 µm umfassen. Die Mittellage kann auch aus mehreren Vliesschichten aufgebaut sein, um bestimmte Isoliereigenschaften zu optimieren. Sowohl die Außenbleche, insbesondere die untere Blechlage, als auch das Metallfaservlies können zumindest teilweise gelocht oder perforiert sein. Außerdem sind die Außenbleche strukturiert um beispielsweise durch gezielte Reflexionen die Schallabschirmung zu verbessern oder um die Oberfläche zu vergrößern.

Auf diese Weise wird ein Abschirmblech bereitgestellt, das idealerweise vollständig aus Metall gefertigt ist, was sowohl die Beständigkeit gegenüber Umgebungsbedingungen als auch das Recycling des Abschirmelements verbessert. Metallfaservlies ist außerdem aufgrund seiner zusammenhängenden Struktur sehr leicht zu verarbeiten, beispielsweise zu schneiden, zu lochen oder zu verformen, um die Mittellage nach Wunsch anzupassen. Es sind keine aufwendigen Bearbeitungsschritte notwendig, und Änderungen, etwa für unterschiedliche Blechformen, können mit wenig Aufwand umgesetzt werden.

### Zeichnungen

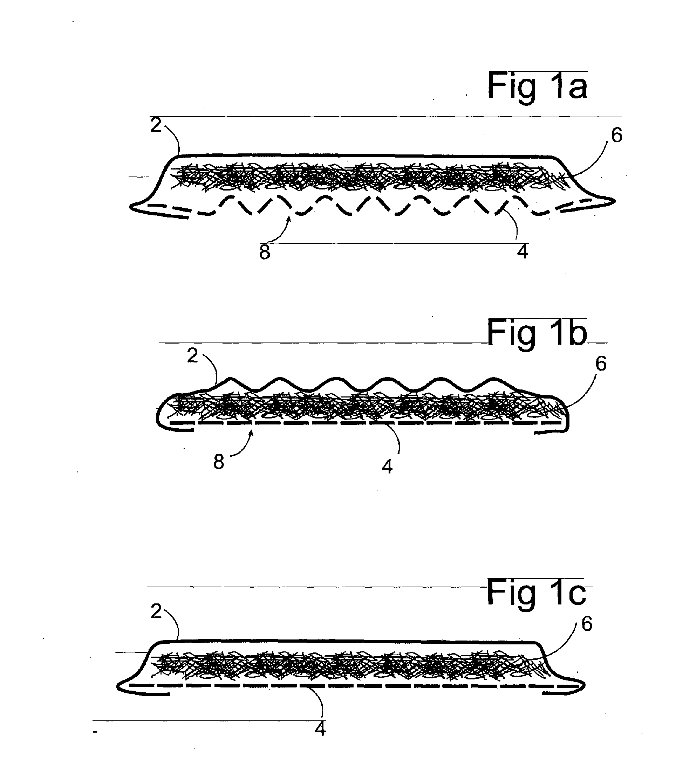

Im Folgenden wird die Erfindung anhand beispielhafter Ausführungsformen mit Bezug auf die beigefügten Zeichnungen näher beschrieben, wobei
Figuren 1a, b und c verschiedene Ausführungsformen mit unterschiedlichen Außenlagen eines dreilagigen Abschirmblechs gemäß der Erfindung im Schnitt zeigen.

### Beschreibung beispielhafter Ausführungsformen

In Figur 1 sind verschiedene beispielhafte Ausführungsformen für ein Abschirmblech der Erfindung gezeigt. In allen Fällen umfasst das Abschirmblech zumindest drei Lagen, nämlich eine untere 4, eine mittlere 6 und eine obere 2 Lage. Die untere Lage ist der Wärme- und/oder Schallquelle zugewandt. Die untere Lage und die obere Lage sind vorzugsweise jeweils aus einem Metallblech gefertigt. Als Material für diese beiden Außenlagen kommen beispielsweise Edelstahlbleche, Aluminiumbleche oder beschichtete (z.B. mit Aluminium beschichtete) Stahlbleche in Frage. Die Außenlagen können aus gleichen oder aus verschiedenen Materialien gefertigt werden und damit an ihre Position angepasst werden, z.B. durch erhöhte Hitzebeständigkeit der unteren Lage.

Die zwischen der unteren 4 und der oberen 2 Blechlage angeordnete Mittellage 6 umfasst ein Metallfaservlies, also ein flächiges Element aus einzelnen überlappenden, nicht miteinander verwobenen metallischen Fasern, die ein zusammenhängendes Vlies bilden. Das Vlies kann beispielsweise durch Sintern verfestigt werden. Die Lagendicke der Mittellage 6 kann bei etwa 0,5 bis 10 mm, vorzugsweise zwischen 0,5 und 7 mm liegen. Als Fasermaterial werden metallische Fasern mit einem Durchmesser von etwa 1 bis 50 µm bevorzugt.

Wie in den Figuren zu sehen ist, können die beiden äußeren Blechlagen je nach Ausführungsform und gewünschten Abschirmeigenschaften unterschiedlich ausgestaltet sein. Jedes der Bleche kann ist teilweise als strukturiertes Blech ausgeführt, etwa mit einer Wellen- oder Noppen-Strukturierung.

Figur 1a zeigt im Querschnitt ein Abschirmblech, bei dem die obere Lage 2 im wesentlichen als glattes Blech ausgestaltet ist, während die untere Lage 4 ein gelochtes, mit einer Wellenstruktur versehenes Blech verwendet. Die Ausführung und Größe der Struktur kann an die zu filternden Schallfrequenzen angepasst werden, um so durch Reflexionen eine bessere Schallisolierung zu erreichen. Ebenso wird durch die Strukturierung eines Blechs natürlich die Oberfläche vergrößert. Figur 1b zeigt beispielsweise ein Abschirmblech mit einer strukturierten, durchgängigen oberen Lage 2 sowie einer latten, gelochten unteren Lage 4. In Figur lc schließlich ist ein Beispiel das nicht Teil der Erfindung ist, mit zwei glatten Blechen 2, 4 für die untere und äußere Lage gezeigt. Auch wenn in diesen Beispielen die Strukturierung jeweils im wesentlichen über die gesamte Fläche gezeigt ist, könnte ein Blech alternativ auch nur in bestimmten Bereichen strukturiert oder mit unterschiedlichen Formen und Höhen von Strukturen versehen sein.

Außerdem können die Bleche teilweise oder vollflächig gelocht ausgeführt werden, etwa mit einer Mikroperforation 8. In Figur 1 ist in allen Ausführungsformen jeweils nur die untere Lage 4 gelocht, die in Richtung der Schall- und Hitzequelle weist. Auf diese Weise wird ein Teil der Schallwellen bereits beim Durchdringen der Lochung 8 durch Reibung am Lochdurchmesser in Wärme umgewandelt. Die Größe und Lage der Perforationen 8 kann flexibel an die auftretenden Frequenzen und Schallquellen angepasst werden. Innerhalb einer Lage können auch mehrere verschiedene Perforationsmuster und Lochdurchmesser in regelmäßigen oder unregelmäßigen Abständen verwendet werden. Ebenso sind aber durchgehende Bleche als Alternative für die obere 2 und untere 4 Lage möglich. Die Perforationen können bis zum Blechrand oder nur in dem Bereich ausgeführt werden, der freiliegend und nicht umbördelt ist.

Das Metallvlies, das als schallabsorbierende Mittellage 6 vorgesehen ist, kann sehr flexibel an die gewünschten Eigenschaften des Abschirmblechs angepasst werden. So können Lagendicke und Flächengewicht des Vlieses nach Anforderung an die Wärme- und/oder Schallisolation ausgerichtet werden. Bevorzugt wird eine Lagendicke von etwa 0,5 bis 7 mm. Ein Metallvlies bietet so ein leicht zu verarbeitendes, hitzebeständiges und optimal anpassbares Lagenmaterial. Die Poren, die durch die Zwischenräume zwischen den Fasern entstehen, sorgen für eine gute Wärmeisolation. Das Flächengewicht und die Faserdicke beeinflussen so über die Porengröße des Vliesmaterials direkt die Isolationseigenschaften der mittleren Lage.

Mögliche Materialien für die Fasern des innen liegenden Metallvlieses sind beispielsweise verschiedene Edelstähle, Nickel, oder Nickellegierungen (Ni6, NiCr). Die Wahl des Materials ist abhängig von den erforderlichen Eigenschaften, etwa vom gewünschten Temperaturbereich. Im Bereich von 400 bis 600°C kommen als Beispiel Edelstähle wie X2CrNiMo17-14-2, X5CrNiMo17-12-2, oder X8CrNi18-9 in Frage. Bei höheren Temperaturen, etwa im Bereich von 800° bis 1200°C, seien als beispielhafte Materialien hochtemperaturbeständige Legierungen wie CrAl 20-5, CrAl 25-5 oder CrAlMo 27-7-2 genannt. Neben der Temperatur können auch andere Eigenschaften, etwa Beständigkeit gegen bestimmte Gase oder ähnliches, für die Materialwahl relevant sein. Andere Metalle und Legierungen mit ähnlichen Eigenschaften, die dem Fachmann bekannt sind, können aber selbstverständlich ebenso verwendet werden. Es ist auch grundsätzlich möglich, Fasermischungen aus verschiedenen Materialien in einem Vlies zu verwenden.

Es ist auch denkbar, die Mittellage 6 aus mehreren Schichten aufzubauen, beispielsweise aus verschiedenen metallischen Vliesmaterialien oder mit unterschiedlicher Vliesdichte. Mehrere Lagen Metallvlies könnten so lose aufeinander gelegt oder fest miteinander verbunden als Mittellage 6 zwischen die Außenbleche 2, 4 eingebracht werden. Die verschiedenen Vliese könnten auch miteinander versintert werden. Zwischen Vlieslagen könnten nach Bedarf weitere Lagen, etwa weitere Blech- oder Folienlagen, eingebracht werden.

Die Mittellage 6 aus Metallvlies kann gelocht, teilweise gelocht ausgeführt sein. Ebenso könnten Prägungen oder anders erreichte Hohlräume in dem Vlies vorgesehen sein. Die sich ergebenden Luftkammern können dann eine Wärmeabschirmfunktion verstärken.

Um die Lagen des Abschirmblechs miteinander zu verbinden, kommen verschiedene Möglichkeiten in Betracht. Beispielsweise könnten die Lagen wie in Figur 1 gezeigt umbördelt werden. Dazu wird eines der Bleche, in den Beispielen die obere Blechlage 2, größer ausgelegt als die mittlere 6 und untere 4 Lage, beispielsweise um etwa 2 bis 10 mm in jede Richtung. Dieser Rand ermöglicht dann ein Umbördeln der Außenlage um die untere Lage 4. Eine vorherige Lagenverpressung am Umfangsrand des Abschirmblechs kann den Bördelprozess erleichtern. Die Mittellage 6 aus Metallvlies wird durch die Umbördelung ebenfalls fixiert. Es ist aber ebenso möglich, die untere Lage 4 größer auszulegen und nach oben umzubördeln, oder beispielsweise das Metallvlies ebenfalls im Umfang größer zu fertigen und mit umzubördeln, um die Kontaktflächen zwischen den Blechen zu verringern.

Weitere Verfahren zur Lagenverbindung sind beispielsweise schweißen, nieten, clinchen oder klemmen der Lagen. Dabei können wahlweise alle Lagen in den Verbindungsprozess mit einbezogen werden oder nur die beiden Außenlagen, also die obere und untere Lage, miteinander verbunden werden.

## Patentansprüche

1. Abschirmblech zur Wärme- und Schallisolation, umfassend
eine untere (4) und eine obere (2) Blechlage,
eine mittlere Lage (6), die zwischen der unteren und der oberen Blechlage angeordnet ist,
wobei die mittlere Lage (6) ein Metallfaservlies umfasst,
wobei die untere (4) und/oder die obere (2) Blechlage zumindest teilweise mit einer Struktur versehen ist, **dadurch gekennzeichnet, daß** das Metallfaservlies zumindest teilweise mit Lochungen versehen ist.

2. Abschirmblech nach Anspruch 1, wobei das Metallfaservlies Metallfasern mit einem Durchmesser von etwa 1 bis 50 µm umfasst.

3. Abschirmblech nach einem der Ansprüche 1 oder 2, wobei die Metallfasern zu dem Metallfaservlies versintert sind.

4. Abschirmblech nach einem der vorhergehenden Ansprüche, wobei das Metallfaservlies aus Edelstahl, aus Nickel, aus einer Nickellegierung oder aus einer Kombination solcher Materialien gefertigt ist.

5. Abschirmblech nach einem der vorhergehenden Ansprüche 1 bis 4, wobei das Metallfaservlies aus mindestens zwei Schichten mit verschiedenem Flächengewicht besteht.

6. Abschirmblech nach einem der vorhergehenden Ansprüche, wobei die mittlere Lage (6) eine Dicke von 0,5 bis 10 mm aufweist.

7. Abschirmblech nach einem der vorhergehenden Ansprüche 1 bis 7, wobei die untere Blechlage (4) zumindest teilweise perforiert (8) ist.

8. Abschirmblech nach einem der vorhergehenden Ansprüche, wobei die Lagen (2, 4, 6) durch Umbördeln, Schweißen, Nieten, oder Klemmen miteinander verbunden sind.

## Claims

1. A sound and heat insulation shield, comprising
a lower (4) and an upper (2) sheet metal layer, and
a central layer (6) that is arranged between the lower and the upper sheet metal layer,
wherein the central layer (6) comprises a metal fiber mat, and
wherein the lower (4) and/or the upper (2) sheet metal layer is at least partially structured, **characterized in that**
the metal fiber mat is at least partially perforated.

2. The shield according to claim 1, wherein the metal fiber mat comprises metal fibers with a diameter of about 1 to 50 µm.

3. The shield according to one of claims 1 or 2, wherein the metal fibers are sintered into the metal fiber mat.

4. The shield according to one of the preceding claims, wherein the metal fiber mat is made of stainless steel, nickel, a nickel alloy or a combination of such materials.

5. The shield according to one of the preceding claims 1 to 4, wherein the metal fiber mat consists of at least two layers with different weight per unit area.

6. The shield according to one of the preceding claims, wherein the central layer (6) has a thickness of 0.5 to 10 mm.

7. The shield according to one of preceding claims 1 to 7, wherein the lower sheet metal layer (4) is at least partially perforated (8).

8. The shield according to one of the preceding claims, wherein the layers (2, 4, 6) are connected to one another by means of flanging, welding, riveting or clamping.

## Revendications

1. Écran de tôle pour l'isolation thermique et acoustique, comprenant
une épaisseur de tôle inférieure (4) et une épaisseur de tôle supérieure (2),
une épaisseur médiane (6) qui est disposée entre les épaisseurs de tôle inférieure et supérieure,
l'épaisseur médiane (6) comprenant un non-tissé de fibres métalliques,
l'épaisseur de tôle inférieure (4) et/ou supérieure (2) étant pourvue du moins partiellement d'une structure, **caractérisé en ce que**
le non-tissé de fibres métalliques est pourvu au moins partiellement de perforations.

2. Écran de tôle selon la revendication 1, dans lequel le non-tissé de fibres métalliques comprend des fibres métalliques d'un diamètre d'environ 1 à 50 µm.

3. Écran de tôle selon une des revendications précédentes 1 ou 2, dans lequel les fibres métalliques sont frittées pour former le non-tissé de fibres métalliques.

4. Écran de tôle selon une des revendications précédentes, dans lequel le non-tissé de fibres métalliques est fabriqué à partir d'inox, à partir de nickel, à partir d'un alliage de nickel ou à partir d'une combinaison de tels matériaux.

5. Écran de tôle selon une des revendications précédentes 1 à 4, dans lequel le non-tissé de fibres métalliques est composé d'au moins deux couches à grammage différent.

6. Écran de tôle selon une des revendications précédentes, dans lequel l'épaisseur médiane (6) présente une épaisseur de 0,5 à 10 mm.

7. Écran de tôle selon une des revendications précédentes 1 à 7, dans lequel l'épaisseur de tôle inférieure (4) est au moins partiellement perforée (8).

8. Écran de tôle selon une des revendications précédentes, dans lequel les épaisseurs (2, 4, 6) sont reliées entre elles par bordurage, soudage, rivetage ou serrage.
